# EUROPÄISCHE PATENTSCHRIFT

(11) **EP 0 414 950 B1**
(45) Veröffentlichungstag und Bekanntmachung des Hinweises auf die Patenterteilung: **30.11.1994**
(21) Anmeldenummer: 89116144.0
(22) Anmeldetag: 31.08.1989
(51) Int. Cl.: H04Q 11/04

(54) **Verfahren zur Vermittlung von jeweils auf mehrere Zeitfächer von Zeitkanälen verteilt übertragenen Sprach- und/oder Daten-informationen**
Method of switching voice and/or data information distributively transmitted in several time slots
Méthode de commutation des informations transmises distributivement sur plusieurs tranches de temps

(43) Veröffentlichungstag der Anmeldung: 06.03.1991
(73) Patentinhaber: SIEMENS AKTIENGESELLSCHAFT, 80333 München (DE)
(72) Erfinder: Nagler, Werner, Dipl.-Ing., D-8021 Schäftlarn (DE); Krumenacker, Rudolf, Dipl.-Ing., D-8000 München (DE); Kaderka, Rostislav, Dipl.-Ing., D-8039 Germering (DE); Marnet, Frank, Dipl.-Ing., D-8000 München (DE)

(56) Entgegenhaltungen:
- EP-A- 0 012 135
- EP-A- 0 323 248

## Beschreibung

Die Erfindung betrifft ein Verfahren zur Vermittlung von jeweils auf mehrere Zeitfächer von Zeitkanälen eines digitalen Zeitmultiplexsystems verteilt auf Zubringer- und Abnehmer Zeitmultiplexleitungen übertragenen Sprach- und/oder Dateninformationen mit Hilfe einer Zeitkoppelstufe mit einem einzigen Zeitstufenspeicher, an den die Zeitmultiplexleitungen angeschlossen sind und in den die auf den Zubringer-Zeitmultiplexleitungen angelieferten Informationen zyklisch eingeschrieben bzw. aus dem diese Informationen entsprechend der beim zyklischen Auslesen eines Haltespeichers bereitgestellten Leseadressen wahlfrei auf die Abnehmer-Zeitmultiplexleitungen ausgelesen werden.

Die Verteilung der zu übertragenen Sprach- und/oder Dateninformationen auf mehrere Zeitkanäle (Mehrkanalverbindungen) kommt insbesondere in ISDN-fähigen in digitalen Fernsprechnetzen in Frage, in denen Fernmeldedienste angeboten werden, die eine höhere Bitübertragungsrate erfordern, als der übliche Fernsprechdienst, z. B. Bildfernsprechen oder die Übertragung von Faximilesignalen.

Für solche Mehrkanalverbindungen muß gefordert werden, daß die Reihenfolge und die Pulsrahmenzugehörigkeit der Teilkanäle empfangsseitig erhalten bleibt. In vielen Fällen besteht diese Forderung bei Vermittlungsstellen mit mehrstufigen Koppelfeldern sogar für die Eingänge und Ausgänge der einzelnen Koppelfeldstufen, um den Steueraufwand zu vermeiden, der zur Wiederherstellung der ursprünglichen Reihenfolge der Teilkanäle erforderlich wäre wenn für die Durchschaltung derselben unterschiedliche Durchschaltewege zugelassen würden. Bei einem bekannten Vermittlungssystem, bei dem dies der Fall ist (DE-A- 22 14 216) ist eine Kennzeichnung der Informationen als zu einem bestimmten Teilkanal gehörig und als aus einem bestimmten Pulsrahmen stammend erforderlich, damit aus einem empfangsseitigen Pufferspeicher die zunächst unabhängig voneinander vermittelten Teilkanäle entsprechend ihrer Kennzeichnung in der richtigen Reihenfolge abgeholt werden können. Diese an sich schon aufwendige Prozedur wird noch komplexer, wenn die Zubringer- und Abnehmerzeitmultiplexleitungen der Koppelanordnung, durch die eine Vermittlung zustande gebracht wird, aufgrund unterschiedlicher Schnittstellenbedingungen unterschiedliche Zeitmarken aufweisen, die das jeweilige Auftreten der Pulsrahmenanfänge auf diesen Zeitmultiplex-Leitungen kennzeichnen.

Gemäß einem anderen Vorschlag wird die Konferenzeinrichtung einer Vermittlungsstelle zur Durchführung der Mehrkanalverbindungen mit herangezogen, was jedoch auch nur dann möglich ist, wenn die Zubringer-und Abnehmerleitungen gleiche Zeitmarken aufweisen.

Aus der EP-A-0 323 248 ist ein Zeitmultiplex-Vermittlungssystem zur Vermittlung von Mehrkanalverbindungen bekannt, bei dem die zu vermittelnden Informationen auf einem einzigen Paar von an dem Zeitstufenspeicher der Koppelstufe angeschlossenen Paar von Zubringer-/Abnehmer-Multiplexleitungen auftreten. Der Zeitstufenspeicher dieses Vermittlungssystems weist zwei Hälften auf, die jeweils für den Inhalt eines Pulsrahmens ausgelegt sind, und die jeweils nacheinander beschrieben werden. In Abhängigkeit von der Phasenlage der Pulsrahmen auf der Zubringer-Zeitmultiplexleitung und der Abnehmer-Zeitmultiplexleitung und in Abhängigkeit von der Relation der Zeitlagen der Zubringerkanäle und Abnehmerkanäle von Mehrkanalverbindungen erfolgt das Auslesen zusammengehörender Informationen entweder aus einer Zeitstufenspeicherhälfte in die gerade auch eingeschrieben wird oder aus der jeweils anderen Zeitstufenspeicherhälfte. Es kann dabei auch Sorge dafür getragen werden, daß die zusammengehörenden Informationen, soweit möglich aus dem jüngsten Pulsrahmen stammen.

Sofern die auf der erwähnten einzigen Zubringer-Multiplexleitung des Multiplexleitungspaares auftretenden Informationen von einer Mehrzahl von Zufuhrleitungen bzw. Zufuhrmultiplexleitungen stammen und dann eingangs der Zeitstufe eine Multiplexbildung vorgenommen sein würde, wären evtl. Phasenunterschiede der Pulsrahmen auf diesen einzelnen Zubringerleitungen im Zuge der Multiplexbildung ausgeglichen worden, wozu ein entsprechender Aufwand an leitungsindividuellen Speichermitteln zu treiben wäre.

Die Aufgabe der Erfindung besteht nun darin, ein Verfahren zur Durchführung von Mehrkanalverbindungen anzugeben, das unter der eingangs genannten Voraussetzung der Koppelstufenrealisierung in Form einer Zeitkoppelstufe den Anforderungen an eine zeitgerechte Durchschaltung der einzelnen Kanalinformationen genügt, ohne daß bezüglich der Zeitmarkenzuteilung der Zu- und Abnehmer-Multiplexleitungen und bezüglich der Anzahl zusammengehörender Zeitkanäle Einschränkungen hinzunehmem sind, und das eine Verringerung des Speicheraufwandes gestattet, der im Hinblick auf unterschiedliche Phasenlagen der Pulsrahmen auf den einzelnen Zubringerleitungen getrieben werden muß.

Diese Aufgabe wird durch die im Kennzeichen des Patentanspruchs angegebenen Merkmale gelöst.

Durch das erfindungsgemäße Verfahren sind Mehrkanalverbindungen, bei denen weder bezüglich der Schnittstellenbedingungen innerhalb des Systems und damit der Zeitmarken der Zubringer- und Abnehmer-Zeitmultiplexleitungen, noch bezüglich der Relation der für eine Mehrkanalverbindung vergebenen Zeitkanäle untereinander, noch bezüglich der Anzahl der Teilkanäle Beschränkungen bestehen, mit geringem Hardwareaufwand realisierbar. Außerdem sind die Durchlaufzeiten durch den Zeitstufenspeicher so gering wie möglich.

In der gleichzeitig eingereichten EP-A-0 414 951 ist angegeben, wie in zweckmäßiger Weise die Auslesesteuerung mit Hilfe eines Rahmensteuerbits beeinflußt werden kann.

Nachstehend wird die Erfindung anhand eines Ausführungsbeispiels unter Bezugnahme auf eine Zeichnung näher erläutert.
In der Zeichnung zeigen:
FIG 1 die Grundstruktur einer Zeitkoppelstufe,
FIGUREN 2 und 3 Zeitkanalkonstellationen auf zwei miteinander zu verbindenden an eine solche Koppelstufe angeschlossenen Zeitmultiplexleitungen und
FIG 4 eine Zeitkoppelstufe in einer zur Durchführung des erfindungsgemäßen Verfahrens geeigneten Ausstattung,
FIG 5 die Belegung des Zeitstufenspeichers einer solchen Zeitkoppelstufe in allgemeiner Form, die
FIGUREN 6 bis 10 Belegungsbeispiele des Zeitstufenspeichers und zugehörigen Haltespeichers für verschiedene Mehrkanalverbindungskonstellationen.

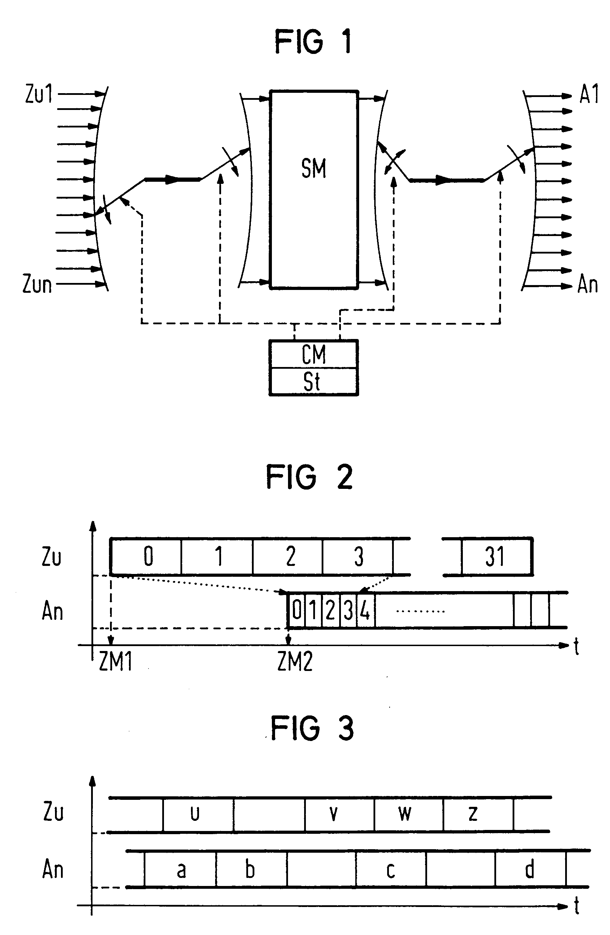

Wesentlicher Bestandteil der Zeitkoppelstufe gemäß FIG 1 ist ein Zeitstufenspeicher SM, an den eingangsseitig Zubringer-Zeitmultiplexleitung Zu1 bis Zun und ausgangsseitig Abnehmer-Zeitmultiplexleitung A1 bis An angeschlossen sind, wobei vorausgesetzt ist, daß auf den Zubringer- und Abnehmerzeitmultiplexleitungen dieselbe Übertragungsgeschwindigkeit herrscht. Die auf den Zubringerleitungen in serieller Form in Zeitfächern von Zeitkanälen angelieferten Sprach- und Dateninformationen erfahren vor dem Einschreiben eine Umwandlung in Parallelform; in entsprechender Weise werden die in Parallelform aus dem Zeitstufenspeicher ausgelesenen Daten vor ihrer Weitergabe in auf den Abnehmerleitungen gebildeten Zeitfächern in Serienform umgewandelt. Diese Vorgänge werden von einer Steuerung St gesteuert.

Normalerweise weist der Zeitstufenspeicher SM eine derartige Speicherkapazität auf, daß er zur Aufnahme der innerhalb eines Pulsrahmens auf den angeschlossenen Zubringerleitungen maximal angelieferten Informationen in der Lage ist.

Das Einschreiben in den Zeitstufenspeicher SM von den Zubringerleitungen aus erfolgt zyklisch, wogegen das Auslesen auf die Abnehmerleitungen wahlfrei vorgenommen wird. Die Ansteueradressen für ein solches wahlfreies Auslesen sind in einem Haltespeicher CM enthalten, der beim Auslesen ebenfalls zyklisch angesteuert wird.

In der FIG 2 sind die Zeitlagenverhältnisse auf einer Zubringerleitung Zu, bei der es sich um eine Zeitmultiplexleitung mit einer Übertragungsrate von 2,048 Mbit/s handeln soll, auf der 32 Zeitkanäle gebildet sind, sowie auf einer Abnehmerleitung An dargestellt, die mit einer Bitrate von 8,192 Mbit/s betrieben sein soll, und auf der demnach Zeitfächer für 128 Zeitkanäle gebildet sind.

Die FIG 2 zeigt, daß diese beiden Zeitmultiplexleitungen unterschiedliche Zeitmarken ZM1 und ZM2 aufweisen, daß die Pulsrahmenanfänge bei der Informationsübertragung auf diese Zeitmultiplexleitungen also zeitlich nicht zusammenfallen.

Wenn eine Mehrkanalverbindung zustande gebracht werden soll, bei der jeweils die Zeitkanäle 0 bis 3 umfaßt sind, wird es bei der Zeitumsetzung durch eine Zeitkoppelstufe gemäß FIG 1 im Zusammenhang mit der während der Zeitlage 3 auf der Zubringerleitung Zu in den Zeitstufenspeicher SM eingeschriebenene Information zu einem Pulsrahmensprung kommen, da das Auslesen während der auf der Abnehmerleitung An gebildeten Zeitlage 3 erfolgt, bevor das Einschreiben der Information, die während der Zeitlage 3 auf der Zubringerleitung angeliefert wird, abgeschlossen ist. Es wird also während der Zeitlage 3 aus dem Zeitstufenspeicher Information ausgelesen, die aus dem vorhergehenden Pulsrahmen stammt, wogegen die während der auf der Abnehmerleitung gebildeten Zeitlagen 0 bis 2 ausgelesenen Informationen aus dem jüngsten Pulsrahmen stammen.

In FIG 3 sind wieder Zeitlagenkonstellationen auf einer Zubringerleitung Zu und einer Abnehmerleitung An dargestellt, wobei es sich jedoch um Multiplexleitungen mit gleicher Übertragungsgeschwindigkeit handelt. Es liegen hier aber die Zeitlagen der Zubringerkanäle u, v, w, und z gegenüber den Zeitlagen der Abnehmerkanäle a, b, c und d so ungünstig, daß während der Zeitlagen der Abnehmerkanäle a, b und c Informationen der Zeitkanäle u, v und w ausgelesen werden, die noch aus dem alten Pulsrahmen stammen, wogegen während der Zeitlage des Zeitkanals d vom Zeitkanal z stammende Information ausgelesen wird, die vom aktuellen Pulsrahmen stammt, so daß auch hier wieder ein Pulsrahmensprung kommt.

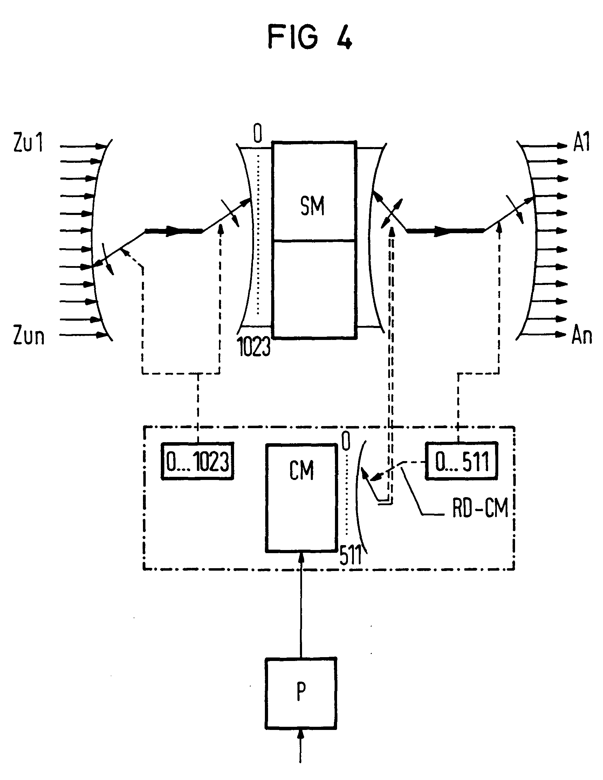

Zur Vermeidung solcher Rahmensprünge weist der Zeitstufenspeicher SM der zur Durchführung des erfindungsgemäßen Verfahrens geeigneten Zeitkoppelstufe gemäß FIG 4 eine doppelte Speicherkapazität auf, so daß er Informationen aufnehmen kann, die im Zuge zweier Pulsrahmen auf den Zubringerleitungen Zu1 bis Zun angeliefert werden. Beim dargestellten Ausführungsbeispiel ist angenommen, daß auf den Zubringerleitungen, bei denen es sich um Multiplexleitungen unterschiedlicher Übertragungskapazität handeln kann, insgesamt 512 Zeitkanäle pro Pulsrahmen gebildet sind, so daß der Zeitstufenspeicher zwei Speicherhälften mit jeweils 512 Speicherzellen für ein Sprachsignal oder Datenwort aufweist. Auch hier erfolgt das Einschreiben der auf den Zubringer-Zeitmultiplexleitungen Zu1 bis Zn angelieferten Sprach- und Dateninformationen nach einer Serien-Parallel-Wandlung zyklisch und zwar nacheinander in die beiden Speicherhälften, wozu ein Schreibzähler Z-WR nacheinander 1024 Einschreibadressen liefert.

Der Haltespeicher CM der Zeitkoppelstufe gemäß FIG 4, der die Ansteueradressen für das wahlfreie Auslesen der Informationen aus dem Sprachspeicher liefert, die dann nach Parallel-Serien-Wandlung auf die Abnehmerleitungen A1 bis An gelangen, enthält 512 Teiladresen, die den jeweils 512 Speicherplätzen in den Zeitstufenspeichern entsprechen und die durch ein höchstwertiges Bit das sogenannte Rahmensteuerbit, ergänzt sind, das darüber entscheidet, ob das Auslesen aus der ersten oder aus der zweiten Speicherhälfte des Zeitstufenspeichers erfolgt. Die Leseansteuerung des Haltespeichers CM erfolgt durch einen Lesezähler Z-RD, der zyklisch nacheinander 512 Leseadressen für den Haltespeicher liefert.

Die Einträge in den Haltespeicher CM und insbesondere die Einstellung des Rahmensteuerbits erfolgt von einem Prozessor P aus, der seinerseits unter dem Steuereinfluß einer hier nicht dargestellten zentralen Steuerung steht, in deren Speicher die Daten bezüglich der zu verbindenden Zeitmultiplexleitungen bzw. Zeitkanäle enthalten sind.

Die Entscheidung darüber, aus welcher Zeitstufenspeicherhälfte das Auslesen erfolgt und damit die Festlegung des Binärwerts des Rahmensteuerbits wird in der Weise getroffen, daß nacheinander ausgelesene zusammengehörige, auf die Zeitfächer mehrerer Zeitkanäle verteilte Informationen aus demselben, und wenn dabei möglich, aus dem jüngsten Pulsrahmen stammen. Hierzu werden durch den Prozessor die räumliche Lage des der betreffenden Zubringer-Zeitmultiplexleitung entsprechend deren Zeitmarke zugewiesenen Speicherbereichs im Zeitstufenspeicher, die Phasenrelation zwischen den zyklisch auftretenden Einschreibadressen des Zeitstufenspeichers, die der Zähler Z-WR liefert, und den zyklisch auftretenden Lesesteueradressen des Haltespeichers CM, die der Zähler Z-RD liefert, jeweils während der Zeitlagen der betreffenden Abnehmerkanäle auf der betreffenden Abnehmer-Zeitmultiplex-Leitung ausgewertet.

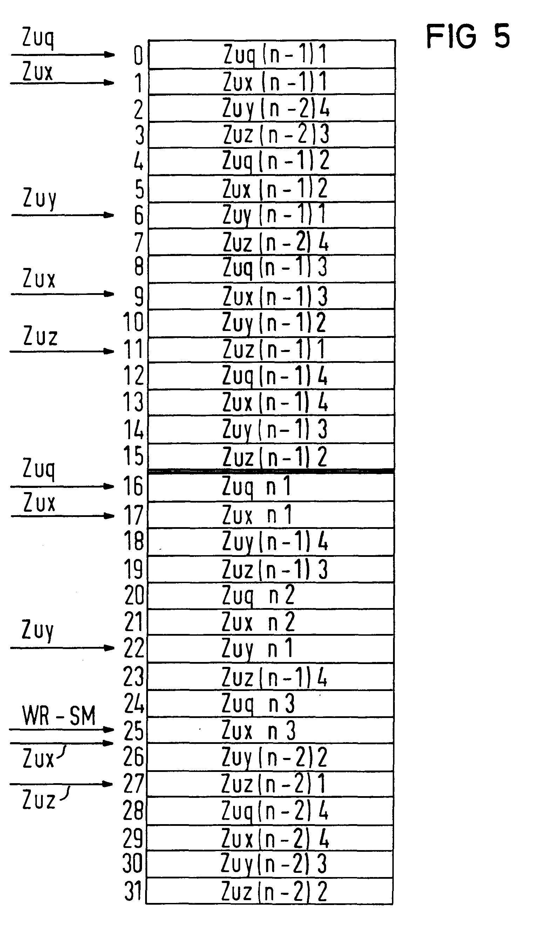

Zur Veranschaulichung der Kriterien, die einer solchen Entscheidung zugrunde liegen, wird zunächst anhand der FIGUR 5 in allgemeiner Form eine Belegung der Zeitstufenspeicherhälften unter der Voraussetzung unterschiedlicher Zeitmarken für die angeschlossenen Zubringer-Zeitmultiplexleitungen veranschaulicht. Es ist hierbei der Anschluß von vier Zubringerleitungen Zuq, Zux, Zuy und Zuz sowie entsprechender Abnehmerleitungen angenommen und vereinfachend vorausgesetzt, daß auf jeder dieser Zubringer- und Abnehmerleitungen jeweils vier Zeitkanäle gebildet sind. Durch entsprechende Pfeile sind die Zeitmarken der Zubringer-Zeitmultiplexleitungen gekennzeichnet, die die Zeitpunkte der Pulsrahmenanfänge auf diesen Zeitmultiplexleitungen angeben bzw. die Speiangeben bzw. die Speicherbereiche bezeichnen, die den Zeitmultiplexleitungen im Zeitstufenspeicher zugewiesen sind. Demnach werden Informationen, die auf der Zubringerleitung Zuq angeliefert werden, in einem Speicherbereich der ersten Hälfte des Zeitstufenspeichers abgelegt, der von dessen Speicherzelle 0 bis dessen Speicherzelle 12 reicht, bzw. in der zweiten Hälfte des Zeitstufenspeichers in einem Speicherbereich, der von der Speicherzelle 16 bis zur Speicherzelle 28 reicht. Aus den Einträgen in den Speicherzellen 0, 4, 8 und 12 bzw. 16, 20, 24 erkennt man, daß in den Speicherzellen des zugewiesenen Bereichs in der ersten Speicherhälfte Informationen eines Pulsrahmens n-1 und in den Speicherzellen des Speicherbereichs der zweiten Speicherhälfte Informationen des nachfolgenden Pulsrahmens n eingetragen sind.

Die FIG 5 zeigt einen Belegungszustand zu einem Zeitpunkt, zu dem gerade in die Zeile 25 ein Eintrag erfolgt, was mit dem Schreibzeiger WR-SM angedeutet ist. Wie sich aus den Einträgen in den nachfolgenden Speicherzellen 26 bis 31 ergibt, erfolgt dabei ein Überschreiben von Informationen, die aus dem Pulsrahmen n-2 stammen.

Die den einzelnen Zubringerleitungen zugewiesenen Speicherbereiche überlappen sich teilweise und gehören zum Teil sowohl der ersten als auch der zweiten Speicherhälfte an. So sind der Zubringerleitung Zuy Speicherbereiche zugewiesen, die von der Speicherzelle 6 in der ersten Speicherzeitstufenhälfte bis zur Zelle 18 in der zweiten Zeitstufenspeicherhälfte bzw. von der Speicherzelle 22 in der zweiten Zeitstufenspeicherhälfte bis zur Speicherzelle 2 in der ersten Zeitstufenspeicherhälfte reichen.

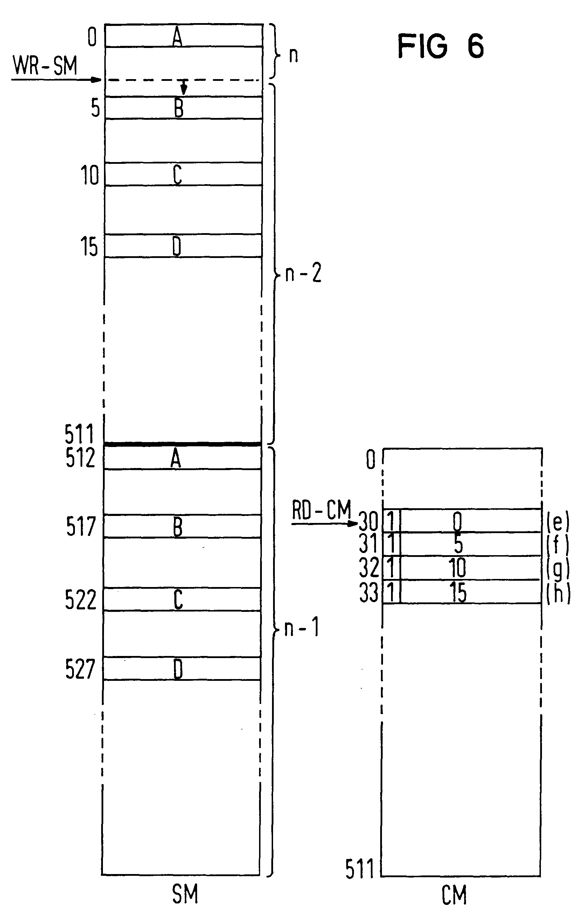

In den Figuren 6 bis 10 werden verschiedene Zeitkonstellationen einer Mehrkanalverbindung veranschaulicht, bei der die Zeitkoppelstufe Zeitkanalumsetzungen von Zeitkanälen A bis D auf einem Zubringer-/Abnehmer-Zeitmultiplexleitungspaar, bei dem es sich um 2,048 MHz-Leitungen handeln soll, auf Zeitkanäle e bis h auf einem anderen Zubringer-/Abnehmerleitungspaar, bei dem es sich um 8,096 MHz-Leitungen handeln soll, vorgenommen werden. Es ist dabei vorausgesetzt, daß die Zeitmultiplexleitungen der Zubringer-/Abnehmerleitungen eines Paares gleiche Zeitmarken aufweisen.

Wie die FIG 6 zeigt, sind die Verhältnisse bezüglich der Informationsübergabe von Zeitkanälen A bis D auf der Zubringerleitung des einen Leitungspaares zu den Zeitkanälen e bis h auf der Abnehmerleitung des anderes Paares veranschaulicht. Aufgrund der Zeitmarke dieser Zubringerleitung und der Kanalverteilung sind die Speicherzellen 0,5, 10 und 15 in der einen Spaltenhälfte bzw. 512, 517, 522, 527 in der zweiten Speicherhälfte mit den Informationen der Teilkanäle A bis D belegt. Die Figur zeigt außerdem die aktuelle Lage des Schreibzeigers des Zeitstufenspeichers WRSM bei der Speicherzelle 3 in der ersten Hälfte des Zeitstufenspeichers SM, wobei Informationen eingeschrieben werden, die dem jüngsten Pulsrahmen n entstammen. Es wird dabei, wie ebenfalls aus der Figur ersichtlich ,aus dem Pulsrahmen n-2 stammende Information überschrieben. Die zweite Speicherhälfte enthält zu diesem Zeitpunkt Informationen, die aus dem Pulsrahmen n-1 stammen.

Im Haltespeicher CM sind gemäß Figur 6 im Zusammenhang mit der genannten Vermittlung in den Zeilen 30 bis 33, die den betreffenden Zeitkanälen auf der 8,096-MHz-Multiplexleitung entsprechen, die Adressen der Speicherzellen 0, 5, 10 und 15 des Zeitstufenspeichers SM eingetragen. Außerdem ist durch den Lesezeiger RD-ZM angedeutet, daß zu dem betrachteten Zeitpunkt gerade die Speicherzelle 30 des Haltespeichers gelesen wird.

Aus der FIG 6 ersieht man, daß bei der angenommenen Konstellation während des Auslesens der Speicherzellen 30 bis 33 und damit der Lieferung der Leseadressen für die Speicherzellen 0,5, 10 und 15 des Zeitstufenspeichers SM der Schreibzeiger WR-SM des Zeitstufenspeichers die letztgenannten Speicherzellen überläuft, so daß aus einem Teil der Zellen schon Informationen des Pulsrahmens n, aus einem anderen Teil derselben dagegen noch Information des Rahmens n-2 ausgelesen wird, es also zu einem Rahmensprung kommt. Um dies zu vermeiden, muß das Auslesen aus der zweiten Hälfte des Zeitstufenspeichers SM erfolgen, womit einheitlich aus dem Rahmen n-1 stammende Zeitkanalinformationen der Kanäle A bis D ausgelesen werden. Aus diesem Grunde weist das Rahmensteuerbit im Haltespeicher CM den Binärwert 1 auf, womit in hier nicht dargestellter Art und Weise bewirkt wird, daß das Auslesen aus dem Zeitstufenspeicher SM immer aus derjenigen Speicherhälfte erfolgt, in die gerade nicht eingeschrieben wird.

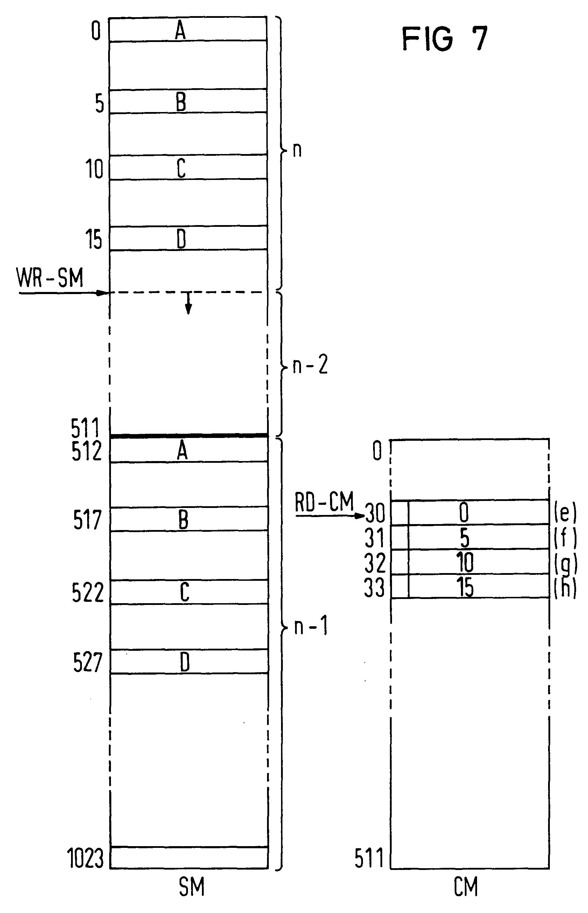

Die in FIG 7 dargestellten Verhältnisse unterscheiden sich von denjenigen gemäß FIG 6 durch eine andere Phasenrelation des Schreibzeigers WR-SM des Zeitstufenspeichers SM und des Lesezeigers RD-ZM des Haltespeichers CM. Wie die FIG zeigt, hat zum Zeitpunkt der Leseansteuerung der Speicherzelle 30 im Haltespeicher der Schreibzeiger WR-SM des Zeitstufenspeichers schon sämtliche Speicherzellen 0,5, 10 und 15 überlaufen und mit Informationen des Pulsrahmens n beschrieben. Da er während des Überlaufens der Speicherzellen 30 bis 33 durch den Haltespeicher-Lesezeiger RD-ZM die zweite Speicherhälfte nicht erreicht, könnte unter dem Gesichtspunkt der Vermeidung von Rahmensprüngen sowohl aus der ersten als auch aus der zweiten Speicherhälfte gelesen werden. Da jedoch immer, wenn möglich, Informationen ausgelesen werden sollen, die dem jüngsten Pulsrahmen entstammen und hier die zweite Speicherhälfte Informationen des älteren Pulsrahmens n-1 enthält, wird das Rahmensteuerbit auf den Binärwert 0 gesetzt, mit der Folge, daß immer aus derselben Speicherhälfte ausgelesen wird, in die gerade eingeschrieben wird, hier also momentan aus der ersten Speicherhälfte.

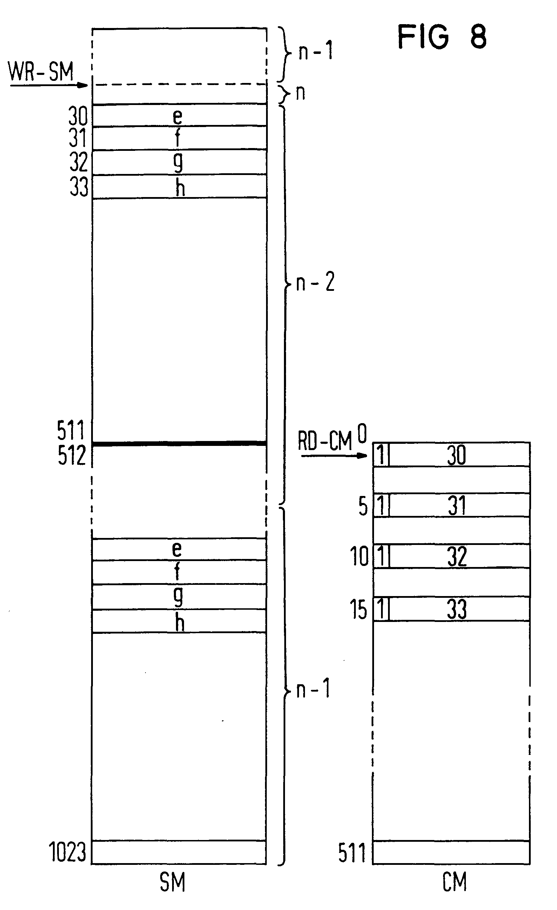

In der FIG 8 werden die Verhältnisse veranschaulicht, die für die Durchschaltung in der umgekehrten Übertragungsrichtung herrschen, nämlich bei der Umsetzung von in den Zeitlagen der Kanäle e bis h auf der 8,096- MHz-Multiplexleitung angelieferten und in den Zeitstufenspeicher eingeschriebenen Informationen auf die Zeitlagen der Zeitkanäle A bis D auf der Abnehmerleitung des 2MHz Zeitmultiplexleitungspaares.

Die hier in den Zeitkanälen e bis h auf der Zubringerleitung das 8,096- MHz-Zeitmultiplexleitungspaares angelieferten Informationen sind daher in den Speicherzellen 30 bis 33 der ersten Zeitstufenspeicherhälflte bzw. 532 bis 535 der zweiten Zeitstufenspeicherhälfte eingespeichert. Der Lesezeiger WR-SM weist bei dem dargestellten Beispiel gerade auf die Speicherzelle 28. In den Speicherzellen 0,5, 10 und 15 des Haltespeichers CM befinden sich die Adressen, mit denen die genannte Zeitstufenspeicherzelle 30 bis 33 beim Auslesen angesteuert werden. Der Lesezeiger des Haltespeichers CM weist hier auf dessen Speicherzelle 0. Auch bei der in FIG 8 dargestellten Phasenkonstellation zwischen dem Schreibzeiger WR-SM und dem Lesezeiger RD-CM werden die auszulesende Speicherzellen 30 bis 33 vom Schreibzeiger WR-SM überlaufen, während der Lesezeiger RD-CM die Speicherzellen 0 bis 15 des Haltespeichers überläuft, so daß auch hier, um Rahmensprünge zu vermeiden, das Lesen aus der jeweils anderen Speicherhälfte erfolgen muß, in die eingeschrieben wird. Die Rahmensteuerbits für die betreffenden Ausleseadressen haben daher den Binärwert 1 aufzuweisen.

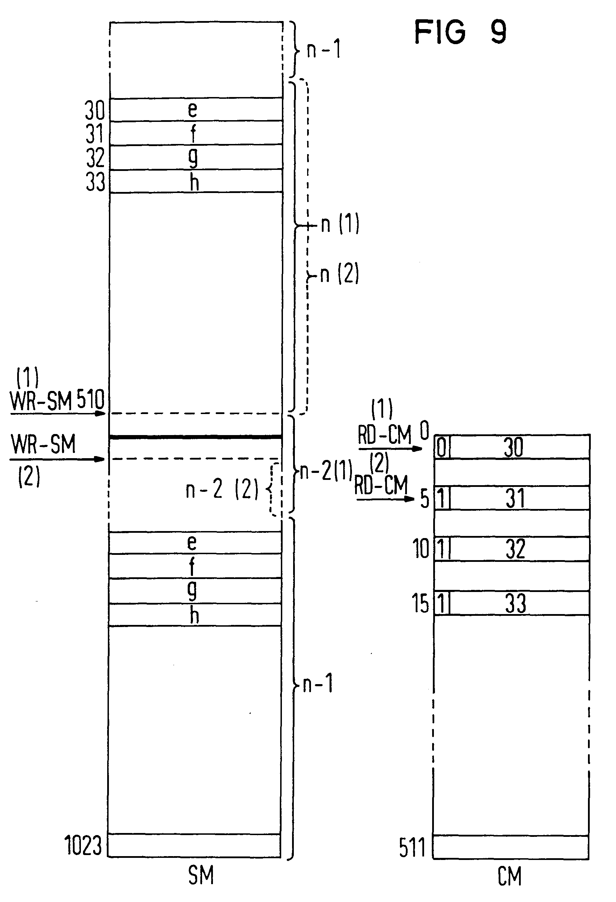

Die FIG 9 entspricht bezüglich der betrachteten Speicherzellen im Zeitstufenspeicher und im Haltespeicher der FIG 8, abweichend hiervor ist jedoch eine andere zeitliche Lage des Schreibzeigers WR-SM angenommen, der sich zum Zeitpunkt (1) an einer der letzten Speicherzellen der ersten Hälfte des Zeitstufenspeichers und zum Zeitpunkt (2) an einer der ersten Speicherzellen der zweiten Hälfte des Zeitstufenspeichers befinden möge. Da bei beiden Beispielen der Schreibzeiger während des Überlaufens des Lesezeigers RD-CM der Speicherzellen 0 bis 15 im Haltespeicher weder in der ersten noch in der zweiten Hälfte die Speicherzellen mit den Kanalinhalten e bis h überläuft, kann es nicht zu einem Rahmensprung kommen. Bei der Schreibzeigerstellung (1) erfolgt gemäß der Annahme in FIG 9 gerade das Auslesen der Speicherzelle 0 des Haltespeichers und damit das Auslesen bei der Information des Kanals e enthaltenden Speicherzelle im Zeitstufenspeicher. Um Information aus dem jüngsten Pulsrahmen n zu erhalten, muß das Auslesen in der ersten Speicherhälfte, also in derselben Speicherhälfte erfolgen, in die momentan eingeschrieben wird. Das Rahmensteuerbit in der Zelle 0 des Haltespeichers weist also den Binärwert 0 auf.

Wenn der Lesezeiger RD-CM des Haltespeichers die Speicherzelle 5 erreicht hat, in der sich die Ansteueradresse für die Zelle 31 des Zeitstufenspeichers befindet (Zeitpunkt (2)), hat der Schreibzeiger WR-SM die zweite Speicherhälfte des Zeitstufenspeichers erreicht. Um auch jetzt Information aus dem nächsten Pulsrahmen n auszulesen, muß nach wie vor das Auslesen aus der ersten Speicherhälfte erfolgen, was bedeutet, daß jetzt aus der Speicherhälfte ausgelesen werden muß, in die gerade nicht eingeschrieben wird, so daß das Rahmensteuerbit in der Speicherzelle 5 des Haltespeichers den Binärwert 1 aufzuweisen hat. Entsprechendes gilt für die Rahmensteuerbits in den Speicherzellen 10 und 15 des Haltespeichers.

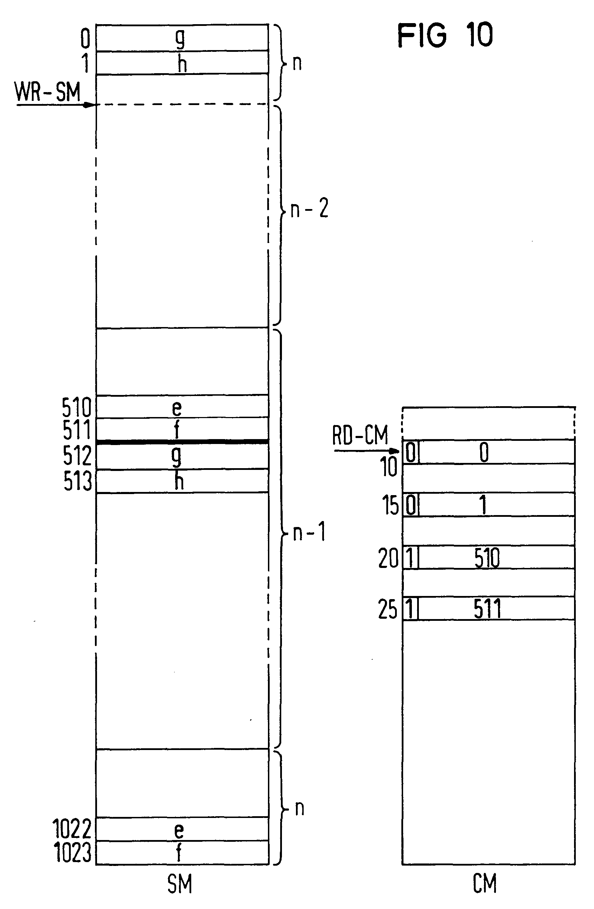

Bei der in FIG 10 dargestellten Konstellation weist das eine Paar von Zubringer-Abnehmerleitungen, bei dem es sich wiederum um eine die betrachteten Kanäle e bis h führenden 8,096-MHz-Zeitmultiplexleitungen handeln soll, eine derartige Zeitmarke auf, daß die Informationen der Kanäle e bis h eines Pulsrahmens z. T. in die erste und z. T. in die zweite Zeitstufenspeicherhälfte eingeschrieben werden, nämlich in die Speicherzellen 510 und 511 der ersten Speicherhälfte und in die Speicherzellen 512 und 513 der zweiten Speicherhälfte bzw. in die Speicherzellen 1022 und und 1023 der zweiten Speicherhälfte und in die Speicherzellen 0 und 1 der ersten Speicherhälfte. Die Phasenlage von Schreibzeiger WR-SM und Lesezeiger RD-CM ist zwar so, daß während des Überlaufens der Speicherzellen 10 bis 25 im Haltespeicher, in denen sich die Ansteueradressen für die Kanalinformationen e bis f führenden Speicherzellen im Zeitstufenspeicher befinden, die letztgenannten Speicherzellen nicht vom Schreibzeiger WR-SM überlaufen werden. Da jedoch, wie angegeben, die Kanalinformationen e bis h desselben Pulsrahmens auf beide Zeitstufenspeicherhälften verteilt ist, kann nicht durchgängig in der einen oder in der anderen Speicherhälfte gelesen werden. Bezüglich der Zeitkanäle e und f müssen vielmehr die Speicherzellen 1022 und 1023 der zweiten Zeitstufenspeicherhälfte ausgelesen werden, was bedeutet, daß das Rahmensteuerbit der Speicherzellen 20 und 25 im Haltespeicher den Binärwert 1 aufzuweisen hat, das Auslesen der Kanalinformation g und h hat hingegen in diesem Fall aus den Zellen 0 und 1 der ersten Zeitstufenspeicherhälfte zu erfolgen, weswegen das Rahmensteuerbit in den Speicherzellen 10 und 15 des Haltespeichers den Binärwert 0 aufzuweisen hat.

Die anhand der FIGUREN 6 bis 10 erläuterten Entscheidungen, die zur Einstellung des Rahmensteuerbits führen, werden jeweils unter Bewertung der räumlichen Lage der betreffenden Zubringer-Zeitmultiplexleitung, der Phasenrelation zwischen den zyklisch auftretenden Einschreibadressen des Zeitstufenspeichers (Schreibzeiger WR-SM) und den zyklisch auftretenden Lesesteueradressen (Lesezeiger RD-CM) jeweils während der Zeitlagen der betreffenden Abnehmerkanäle auf der betreffenden Abnehmer-Zeitmultiplexleitung getroffen.

## Patentansprüche

1. Verfahren zur Vermittlung von jeweils auf mehrere Zeitfächer von Zeitkanälen eines digitalen Zeitmultiplexsystems verteilt auf Zubringer- und Abnehmer-Zeitmultiplexleitungen übertragenen Sprach- und/oder Dateninformationen mit Hilfe einer Zeitkoppelstufe mit einem einzigen Zeitstufenspeicher, an den die Zeitmultiplexleitungen angeschlossen sind und in den die auf den Zubringer-Zeitmultiplexleitungen angelieferten Informationen zyklisch eingeschrieben bzw. aus dem diese Informationen entsprechend der beim zyklischen Auslesen eines Haltespeichers bereitgestellten Leseadressen wahlfrei auf die Abnehmer-Zeitmultiplexleitungen ausgelesen werden,
**gekennzeichnet durch** folgende Merkmale:
a) das zyklische Einschreiben erfolgt nacheinander in die in ihrer Speicherkapazität jeweils zur Aufnahme der innerhalb eines Pulsrahmens auf der Gesamtheit der angeschlossenen Zubringer-Zeitmultiplexleitungen (Zu1 bis Zun) angelieferten Informationen bemessenen Hälften des Zeitstufenspeichers (SM)
b) den angeschlossenen Zubringer-Zeitmultiplexleitungen werden entsprechend für sie gültiger Zeitmarken, die die zeitliche Lage der Pulsrahmenanfänge bei der auf ihnen stattfindenden Informationsübertragung bestimmen, Speicherbereiche des Zeitstufenspeichers (SM) zugewiesen, die sich im Einzelfall auch über beide Speicherhälften erstrecken können,
c) das wahlfreie Auslesen erfolgt entsprechend dem Binärwert eines Rahmensteuerbits, das das höchstwertige Bit der im Haltespeicher (CM) enthaltenen Leseadressen des Zeitstufenspeichers (SM) darstellt, entweder aus der Zeitstufenspeicherhälfte, in die gerade zyklisch eingeschrieben wird, oder aus der jeweils anderen Zeitstufenspeicherhälfte, wobei
d) die Entscheidung darüber in der Weise getroffen wird, daß nacheinander ausgelesene zusammengehörige auf die Zeitfächer mehrerer Zeitkanäle verteilte Informationen aus demselben und wenn dabei möglich aus dem jüngsten Pulsrahmen stammen, wozu
e) die räumliche Lage des der betreffenden Zubringer-Zeitmultiplexleitung entsprechend deren Zeitmarke zugewiesenen Speicherbereichs im Zeitstufenspeicher (SM), sowie die Phasenrelation zwischen den zyklisch auftretenden Einschreibadressen des Zeitstufenspeichers (SM) und den zyklisch auftretenden Lesesteueradressen des Haltespeichers (CM) jeweils während der Zeitlagen der betreffenden Abnehmerkanäle auf der betreffenden Abnehmerleitung ausgewertet werden.

## Claims

1. Method for switching voice and/or data information transmitted on offering and serving time-division multiplex lines, distributed in each case over a plurality of time cells of time slots of a digital time-division multiplex system, with the aid of a time-division multiplex switching stage having a single time stage memory, to which the time-division multiplex lines are connected and into which the information supplied on the offering time-division multiplex lines is cyclically written or, respectively, from which said information is randomly read onto the serving time-division multiplex lines in accordance with the read addresses provided during cyclical reading of a latch, characterized by the following features:
a) the cyclical writing is performed successively into the halves of the time stage memory (SM) dimensioned in terms of their memory capacity in each case to accommodate the information supplied on all the connected offering time-division multiplex lines (Zu1 to Zun) within one pulse frame,
b) memory areas of the time stage memory (SM), which in individual cases may also extend over both memory halves, are assigned to the connected offering time-division multiplex lines in accordance with timing marks applicable to them which determine the temporal position of the pulse frame starts during the information transmission taking place thereon,
c) the random reading is performed in accordance with the binary value of a frame control bit which represents the most significant bit of the read addresses of the time stage memory (SM) contained in the latch (CM), either from the time stage memory half which has just been cyclically written, or from the respective other time stage memory half, whereby
d) the decision as to the above is taken in such a way that successively read associated information which is distributed over the time cells of a plurality of time slots originates from the same, and if possible here from the most recent, pulse frame, for which purpose
e) the spatial position in the time stage memory (SM) of the memory area assigned to the respective offering time-division multiplex line in accordance with its timing mark, as well as the phase relation between the cyclically occurring write addresses of the time stage memory (SM) and the cyclically occurring read control addresses of the latch (CM) are evaluated in each case during the time slices of the respective serving channels on the respective serving line.

## Revendications

1. Procédé pour commuter des informations vocales et/ou des informations de données, transmises respectivement en étant réparties dans plusieurs créneaux temporels de canaux temporels d'un système numérique de multiplexage temporel, à des lignes à multiplexage temporel d'arrivée et de départ, à l'aide d'un étage de couplage temporel comportant une seule mémoire d'étage temporel, à laquelle sont raccordées les lignes à multiplexage temporel et dans laquelle les informations délivrées dans les lignes à multiplexage temporel d'arrivée sont enregistrées cycliquement ou à partir de laquelle ces informations sont lues au choix, en fonction des adresses de lecture préparées lors de la lecture cyclique d'une mémoire de maintien, pour être envoyées aux lignes à multiplexage temporel de départ, caractérisé par les particularités suivantes :
a) l'enregistrement cyclique s'effectue successivement dans les moitiés de la mémoire d'étage temporel (SM), dont la capacité est dimensionnée de manière à respectivement recevoir les informations délivrées à l'intérieur d'une trame d'impulsions à la totalité des lignes à multiplexage temporel d'arrivée raccordées (Zu1 à Zun),
b) aux lignes à multiplexage temporel d'arrivée raccordées sont affectées, en fonction de marques temporelles qui sont valables pour ces lignes et qui déterminent la position temporelle des débuts des trames d'impulsions lors de la transmission d'informations qui intervient dans ces lignes, des zones de la mémoire d'étage temporel (SM), qui peuvent également s'étendre, dans un cas particulier, également sur les deux moitiés de la mémoire,
c) la lecture libre s'effectue en fonction de la valeur binaire d'un bit de commande de trame, qui représente le bit de poids maximum des adresses de lecture, contenues dans la mémoire de maintien (CM), de la mémoire d'étage temporel (SM), soit à partir de la moitié de la mémoire d'étages temporels, dans laquelle un enregistrement est précisément exécuté cycliquement, ou à partir de l'autre moitié respective de la mémoire d'étages temporels, auquel cas
d) la décision est prise quant au fait que des informations continues, lues successivement et réparties entre les créneaux temporels de plusieurs canaux temporels proviennent de la même trame d'impulsions et, si cela est possible, de la trame d'impulsions la plus récente, et à cet effet
e) la position spatiale de la zone de mémoire affectée à la ligne à multiplexage temporel d'arrivée concernée, en fonction de sa marque temporelle, dans la mémoire d'étages temporels (SM) ainsi que la relation de phase entre les adresses d'enregistrement, apparues cycliquement, de la mémoire d'étages temporels (SM) et les adresses de commande de lecture, apparaissant cycliquement, de la mémoire de maintien (CM) pendant les plages temporelles des canaux de réception concernés dans la ligne de départ considéré, sont évaluées.
